# EUROPEAN PATENT APPLICATION

(11) **EP 4 717 671 A1**
(43) Date of publication of application: **01.04.2026**
(21) Application number: 24203266.2
(22) Date of filing: 27.09.2024
(51) Int. Cl.: C01C 3/12, B01J 19/24

(54) **A METHOD FOR MANUFACTURING A PRUSSIAN WHITE COMPOUND**

(71) Applicant: Altris AB, 753 41 Uppsala (SE)
(72) Inventor: MOGENSEN, Ronnie, Uppsala (SE); NORDH, Tim, Uppsala (SE)
(74) Representative: Kransell & Wennborg KB

(57) **Abstract**

The present disclosure generally relates to a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting the second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein the Prussian White compound is defined by the formula AₐX¹[X²(CN)₆]_{1-y}, wherein 1.8 < a ≤ 2, 0 ≤ y ≤ 0.2;
c) recycling said HCN by reacting NaOH or KOH with said HCN to form said first precursor; and
d) introducing said first precursor into said step a).

The present disclosure also relates to a system for manufacturing a Prussian White compound.

## Description

### TECHNICAL FIELD

The present invention relates to a method for manufacturing a Prussian white compound and to a system for manufacturing the Prussian white compound.

### BACKGROUND

To date, lithium-ion based batteries (LIB) dominate the market for rechargeable batteries. However, the technology is associated with drawbacks, particularly since the availability of lithium resources is limited. Furthermore, the disposal of spent LIBs is challenging both from a recycling and waste management perspective. Specific precautions are typically required to handle spent LIBs in a safe manner, and improper disposal may have a negative environmental impact.

Sodium ion batteries (SIBs) have emerged as attractive alternatives to LIBs. SIBs offer environmental advantages due to the abundance of sodium resources and the reduced environmental impact associated with sodium extraction and processing. The performance of a sodium ion battery is largely dependent on the properties of the cathode material.

Prussian White (PW) is an environmentally friendly cathode material, which has gained considerable attention due to its high theoretical capacity and rate performance.

Prussian White has a crystal structure with an open three-dimensional framework and large interstitial voids, which makes it capable of storing sodium ions in an efficient manner.

Prussian White may be synthesized via co-precipitation, in which an aqueous solution of precursor salts, e.g. sodium ferrocyanide (Na₄Fe(CN)₆) and iron sulfate (FeSO₄) are mixed and reacted under conditions that lead to the formation of an insoluble product, Prussian White, to precipitate out of the solution.

Alternatively, Prussian White may be synthesized via acid decomposition, as described in e.g. WO2018/056890A1.

Acid decomposition involves treating a transition metal cyanide-containing precursor, e.g. sodium ferrocyanide (Na₄Fe(CN)₆) with an acid under conditions leading to decomposition of the precursor. The acidic environment and specific reaction conditions cause some of the cyanide groups (CN) to dissociate from the transition metal cyanide-containing precursor and combine with hydrogen ions (H⁺) to form HCN gas. The remaining free metal ions then react with residual transition metal cyanide-containing precursor to form Prussian white.

While the acid decomposition synthesis route can achieve Prussian White having a high sodium/potassium content (compared to co-precipitation), the production of HCN gas during synthesis is associated with several challenges. HCN is toxic and requires stringent safety measures for handling and disposal. Furthermore, improper management of HCN can lead to severe environmental risks.

Furthermore, in the synthesis of Prussian White, large amounts of virgin starting materials are typically consumed, which is associated with high costs and high energy demands.

In view of this, there is a need to provide an improved method to synthesize Prussian White via the acid decomposition route, which is cost-efficient, safe, and associated with a significantly reduced environmental or climate impact.

### SUMMARY

It is an object of the present invention to at least partially overcome the problems of the prior art, and to provide a more sustainable method for manufacturing Prussian white compounds. This and other objects, which will become apparent in the following, are accomplished by a method of manufacturing a Prussian white compound and a system for manufacturing a Prussian White compound, as defined in the independent claims.

According to a first aspect of the invention, there is provided a method for manufacturing a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, and 0 ≤ y ≤ 0.2;
c) recycling said HCN by reacting NaOH or KOH with said HCN to form said first precursor; and
d) introducing said first precursor into said step a).

According to a second aspect of the invention, there is provided a system for manufacturing a Prussian White compound comprising:
a) a reactor unit configured to conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn; and
   to conduct a second reaction of said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, 0 ≤ y ≤ 0.2; and
b) a scrubbing device arranged in fluid communication with said reactor unit, wherein said scrubbing device is configured to conduct a third reaction of NaOH or KOH with said HCN to form said first precursor, and
wherein said scrubbing device is configured to feed said first precursor into said reactor unit.

The inventive method and system have proven to be highly promising for manufacturing Prussian white material suitable as electrode active material, and in particular cathode active material. The present invention is based on the finding that HCN produced as a by-product during the acid decomposition of the second and third precursors may be reacted with NaOH or KOH to form the first precursor. Said formed first precursor may be used in the manufacture of additional second and third precursors, and subsequently Prussian white compound. Thus, the efficiency is increased and less virgin first precursor is consumed. Expressed differently, in the present invention, the HCN is recycled to form new first precursor which may be used for manufacturing additional Prussian white compound. This advantageously decreases the need for virgin first precursor material. Thus, the manufacturing method is environmentally friendly and cost-effective.

Another advantage associated with the method of the present disclosure is that time-consuming and labor-intensive recovery, destructions steps, and/or waste packaging and transporting steps of the HCN may be avoided. The HCN produced during the process is scrubbed using NaOH (or KOH) to form NaCN (or KCN), which, as mentioned hereinbefore is re-introduced into the manufacturing process. In this regard, the method of the present disclosure may decrease strenuous handling and disposal of toxic HCN. Accordingly, a safer, less hazardous, and more sustainable method to synthesize Prussian White compounds is provided.

It is understood that some of the advantages discussed in relation to the first aspect also apply to the second aspect.

### BRIEF DESCRIPTION OF THE DRAWINGS

The various aspects of the present disclosure, including its particular features and advantages, will be readily understood from the following detailed description and the accompanying drawings, in which:
Figure 1 shows a flowchart explaining the steps of a method in accordance with exemplary embodiments of the present disclosure;
Figure 2 schematically illustrates a system in accordance with exemplary embodiments of the present disclosure;
Figures 3a-e illustrate the XRD patterns obtained for the Prussian white particles produced in Example 1;
Figure 4 illustrates the XRD pattern obtained for the Prussian white particles produced in Example 2.

The figures are not necessarily to scale, and generally only show parts that are necessary in order to elucidate the inventive concept, wherein other parts may be omitted or merely suggested.

### DETAILED DESCRIPTION

The present disclosure will now be described more fully hereinafter with reference to the accompanying drawings. The present disclosure may, however, be embodied in many different forms and should not be construed as limited to the embodiments set forth herein; rather, these embodiments are provided for thoroughness and completeness, and fully convey the scope of the present disclosure to the skilled person.

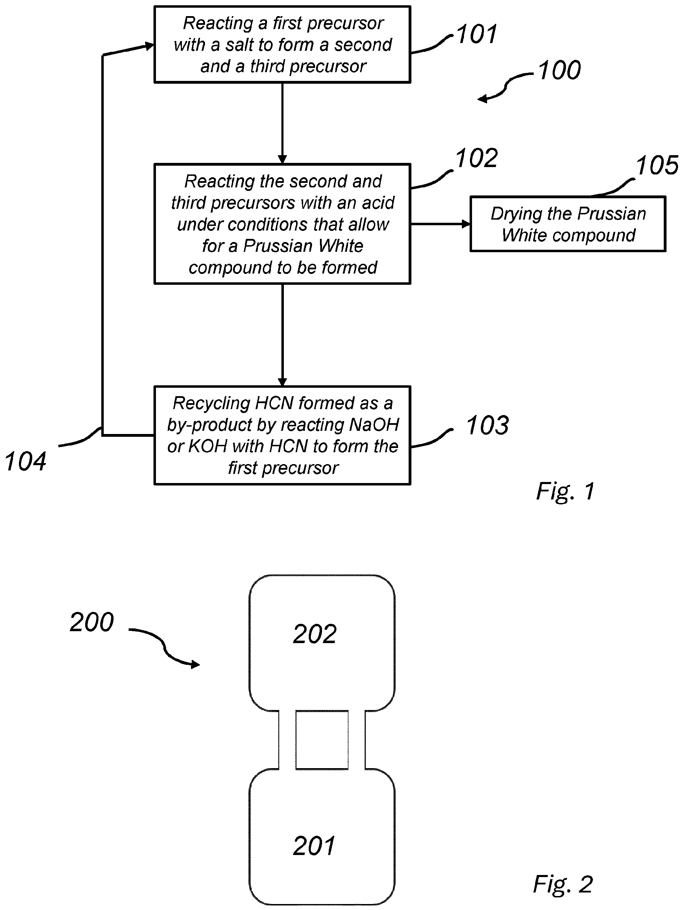

Figure 1 is a schematic flow-chart describing the steps of the method according to a first aspect of the invention. In the first aspect of the invention, there is provided a method 100 for manufacturing a Prussian White compound comprising:
a) reacting (101) a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting (102) said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, and 0 ≤ y ≤ 0.2;
c) recycling (103) said HCN by reacting NaOH or KOH with said HCN to form said first precursor; and
d) introducing (104) said first precursor into said step a).

Herein, the term "precursor" refers to a compound or substance that precedes and partakes in the formation of another compound during a chemical reaction.

The inventive method and system have proven to be highly promising for manufacturing Prussian white material suitable as electrode active material, and in particular cathode active material. The present invention is based on the finding that HCN produced as a by-product during the acid decomposition of the second and third precursors may be reacted with NaOH or KOH to form the first precursor. Said formed first precursor may be used in the manufacture of more second and third precursors, and subsequently Prussian white compound. Thus, the efficiency is increased and less virgin first precursor is consumed. Expressed differently, in the present invention, the HCN is recycled to form new first precursor which may be used for manufacturing additional Prussian white compound. This advantageously decreases the need for virgin first precursor material. Thus, the manufacturing method is environmentally friendly, efficient, and cost-effective.

Another advantage associated with the method of the present disclosure is that time-consuming and labor-intensive recovery, destructions steps, and/or waste packaging and transporting steps of the HCN may be avoided.

In addition, conventional Prussian White synthesis methods typically require lengthy drying and recovering steps, separate sodium enrichment steps, and the use of complex mechanochemical post-synthesis modifications, all of which may be regarded as inconvenient for large scale production. In the method of the present disclosure, the Prussian White compound obtained in step b) may be recovered and subsequently dried. Only one drying step is required. As demonstrated in the Example section, the Prussian White compound obtained is associated with high sodium content and low Fe(CN)₆ vacancy content and is a promising cathode active material.

The inventors have further found that the reaction of step a) is exothermal. This advantageously allows for a more cost-effective and environmentally friendly method as less or in some examples no additional heat needs to be supplied from an external heat source to obtain optimal or at least more optimal reaction conditions in step b). An external heat source may for example be a hot plate, an oil bath, an oven, or an electrical heat tracing system.

The second precursor, defined by the formula A₄X¹(CN)₆ may be the same as the third precursor defined by the formula A₄X²(CN)₆. This will be the case if the cation of the salts used in step a) are the same, or if only one salt, such as FeSO₄ is used in step a). Accordingly, in the Prussian White compound formed in step b), defined by AₐX¹[X²(CN)₆]_{1-y}, X¹ and X² will be the same, e.g. Fe.

For example, step b) may comprise the reaction:

2 Na₄Fe(CN)₆ + 3 H₂SO₄ → Na₂Fe[Fe(CN)₆] + 6 HCN + 3 Na₂SO₄.

Alternatively, the second precursor, defined by the formula A₄X¹(CN)₆ may be different from the third precursor defined by the formula A₄X²(CN)₆. This will be the case if the cations of the salts used in the reactions are different, e.g. if two different salts are utilized, such as FeSO₄ and CoSO₄ in step a). Accordingly, in the Prussian White compound formed in step b), defined by AₐX¹[X²(CN)₆]_{1-y}, X¹ and X² will be different, e.g. Fe, and Co, respectively.

For example, step b) may comprise the reaction:

Na₄Fe(CN)₆ + Na₄Mn(CN)₆ + 3 H₂SO₄ → Na₂Mn[Fe(CN)₆] + 6 HCN + 3 Na₂SO₄.

As illustrated in figure 1, the method may comprise a step of drying the Prussian White compound obtained in step b) (denoted 105 in figure 1).

The method may comprise the steps of:
- separating the Prussian White compound obtained in step b);
- drying the Prussian White compound.

The separation step may for example be performed using a filter press or a centrifuge.

The step of drying may be performed by means known to the skilled person. The step of drying may for example be performed using a rotary dryer, a fluidized bed dryer, a spray dryer, a vacuum dryer, or a conveyor dryer.

It is understood that the first precursor, the salt, the second and third precursors, and/or the acid may be at least partially dissolved/dissociated in a solvent, such as substantially completely dissolved in a solvent, during step a) and b). In other words, e.g., step a) may comprise reacting a dissolved first precursor with a dissolved salt. Additionally, e.g., step b) may comprise reacting dissolved second and third precursors with a dissociated acid. Herein, "dissolved/dissociated" refers to a molecule separated into one or more cations and one or more anions.

Herein, the term "virgin first precursor material" refers to a first precursor material which has not been recycled through the process of the present disclosure. Virgin NaCN (or KCN) may for example be produced by reacting HCN with NaOH (or KOH).

Herein, the term "salt" refers to a compound comprising positively charged ions (cations) and negatively charged ions (anions) that are ionically bonded. In a dissolved state the cation(s) and the anion(s) of the salt are dissociated into individual ions. Salt and dissolved salt are known to the person skilled in the art.

Reacting the second and third precursors with an acid "under conditions that allow for a Prussian White compound to be formed" means performing step b) at a temperature of from 75 to 98°C, preferably from 80 to 95°C, preferably from 85 to 95°C and at a pH of from 1.8 to 4.5, preferably from 2 to 3.5. Step b) may be performed during 1 to 24 hours, such as 2 to 20 hours, preferably 3 to 12 hours, more preferably 4 to 8 hours. It is contemplated that such conditions trigger acid decomposition of the second and third precursors, whereby the Prussian White compound is formed. Reacting the second and third precursors with an acid may thus be an acid decomposition reaction. Expressed differently, the conditions of step b) allow for acid decomposition of the second and third precursors.

Herein, the term "recycling" refers to the process of recovering and treating by-products to produce compounds which may be entered into a production cycle.

Herein, the term "by-product" refers to a secondary product or substance that is produced during a chemical reaction or manufacturing process but is not the primary intended product. In other words, by-products are generated alongside the primary intended product.

Herein, the term "cathode active material" refers to a material that can reversibly insert ions, such as sodium ions, during cell charge and discharge cycles.

CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, and MnCl₂ are also known as cobolt(II) sulfate, cobolt(II) phosphate, cobolt(II) acetate, cobolt(II) oxalate, cobolt(II) formate, cobolt chloride, chromium(II) sulfate, chromium(II) phosphate, chromium(II) acetate, chromium(II) oxalate, chromium(II) formate, chromium chloride, ferrous sulfate, ferrous phosphate, ferrous acetate, ferrous formate, ferrous oxalate, ferrous chloride, manganese(II) sulfate, manganese(II) phosphate, manganese(II) acetate, manganese(II) oxalate, manganese(II) formate, and manganese chloride, respectively.

H₂SO₄, H₄C₂O₂, H₂C₂O₄, H₂CO₂, H₃PO₄, H₃PO₃, HCl, and HClO₂ are also known as sulfuric acid, acetic acid, oxalic acid, formic acid, phosphoric acid, phosphorous acid, hydrochloric acid, and chlorous acid respectively.

NaCN and KCN are also known as sodium cyanide and potassium cyanide, respectively.

The term "Prussian White compound" means a compound defined by the formula AₐX¹[X²(CN)₆]_{1-y}, wherein A is Na or K, 1.8 < a ≤ 2, 0 ≤ y ≤ 0.2, X¹ and X² are individually selected from Co, Cr, Fe, and Mn. Preferably, X¹ and X² are selected from Fe and Mn. The Prussian White compound comprises iron (Fe), manganese (Mn), cobolt (Co), or chromium (Cr) ions which are linked through cyanide (CN) bridges, forming a three-dimensional framework. The framework forms a cubic-like arrangement, in which each iron, manganese, cobolt or chromium ion is surrounded by six cyanide groups. Sodium or potassium ions reside within the cavities or interstitial sites of the cubic arrangement formed by e.g. Fe[Fe(CN)₆] or Mn[Mn(CN)₆] units. Herein, Prussian white compound encompasses both hydrated and dehydrated Prussian white compounds.

Hydrated Prussian white compounds may be understood as Prussian white compounds having water molecules arranged in voids and/or interstitial spaces of the crystal structure. The water molecules may be bonded through a hydrogen bond with the nitrogen of the (CN)₆, a metal-ligand bond with one of the transition metal cations, or an ion-dipole bond with sodium.

Dehydrated Prussian white compounds may be understood as Prussian white compounds substantially free of water molecules arranged in voids and/or interstitial spaces of the crystal structure. The amount of water molecules arranged in voids and/or interstitial spaces of the crystal structure may be determined using Thermogravimetric Analysis (TGA).

In some embodiments, X¹ and X² are Fe or Mn. Preferably, X¹ and X² are Fe, and A is Na. The method of the present disclosure may yield Prussian white compounds defined by the formula AₐX¹[X²(CN)₆]_{1-y}, wherein A is Na, 1.8 < a ≤ 2, 0 ≤ y ≤ 0.2, X¹ and X² are Fe. The method of the present disclosure may yield such Prussian White compound having a high sodium-content and a high degree of crystallinity.

The chemical composition of the Prussian white compound may be measured by methods known in the art. For example, an inductively coupled plasma (ICP) spectrometer (e.g., PerkinElmer Avio 200), CHNOS elemental analysis and/or Mössbauer spectrometry (e.g., an MS 96 spectrometer) may be used to measure a content of element(s) in a sample of the Prussian white compound. The Prussian white compound is a solid and may be in the form of particles, i.e. discrete portions of solid matter.

Typically, the particles have a Dv50 value of from 1 to 50µm, preferably from 10 to 45µm, more preferably in the range of from 12 to 30µm, as determined according to ISO 13320:2009.

Herein, the term "Dv50 value" refers to a particle diameter below which 50% of the sample volume exists. The Dv50 value may also be understood as the median particle size by volume or the volumetric particle size distribution. Dv50 as such is known to the person skilled in the art. A Dv50 value of a sample volume (a plurality of particles) may be measured using, e.g., a PSA 1090 LID (Anton Paar) instrument. The Dv50 may be determined according to ISO 13320:2009 or ASTM B822-20.

In some embodiments, the method further comprises the steps of:
- providing a first precursor selected from NaCN and KCN; and
- providing a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof.

In some embodiments, the step a) is conducted at a pH of from 9 to 14, preferably from 10 to 13.

This pH range is beneficial to improve the quality and yield of the second and third precursors, which is important for producing Prussian White with a high sodium (or potassium) content. At pH levels below 9, the second and third precursors can still form, however, undesirable co-precipitation of "poor-quality" Prussian White as well as the formation of unwanted iron solids (e.g. iron hydroxide and iron oxyhydroxide) may also occur, which may lead to reduced material performance and a decreased yield.

By performing step a) of the method at a pH level of from 9 to 14, preferably from 10 to 13, the potentially formed Prussian White is unstable, and the second and third precursors become the dominant species, ensuring a high yield and superior product quality.

The alkaline pH may be controlled by performing step a) in the presence of an alkaline additive. Hence, in step a), the first precursor may be reacted with the salt in the presence of an alkaline additive, preferably wherein the alkaline additive is selected from the group consisting of NH₄OH, NaOH, Na₃PO₄, Na₂CO₃, KOH, and K₂CO₃.

NH₄OH, NaOH, Na₃PO₄, Na₂CO₃, KOH, and K₂CO₃ are also known as ammonium hydroxide, sodium hydroxide, trisodium phosphate, sodium carbonate, potassium hydroxide, and potassium carbonate, respectively.

In some embodiments, said salt is defined by a first cation and a first anion; said acid being defined by a second cation and a second anion, wherein said second anion of said acid in said step b) corresponds to said first anion of said salt in said step a).

Providing said second anion of said acid in said step b) corresponding to said first anion of said salt in said step a) advantageously allows for a cost-effective process as only one type of anion (and any accompanying by-products thereof) stemming from the first and second anion must be handled during down-stream processing steps such as effluent treatment. Having different anions of the acid and the salt may lead to two types of residual anions and/or the formation of (at least) one more by-product which may need to be separated and/or processed using different more complex methods.

In other words, a consistent chemical environment is provided, which secures that the formation of Prussian White compound proceeds efficiently, and that unwanted by-products or side reactions (with e.g. foreign anions) are not formed.

In some embodiments, step b) is performed at a temperature of from 65 to 95°C, preferably from 75 to 95°C. The inventors have found that a temperature range of from 65 to 95°C, preferably from 75 to 95°C, ensures that the Prussian White compound can be obtained in a high yield and with a high sodium (or potassium) content as well as a low vacancy content. In this regard, labor-intensive separate sodium (or potassium) enrichment steps, typically associated with conventional Prussian White synthesis routes, may be avoided.

Additionally, the temperatures of from 65 to 95°C, preferably from 75 to 95°C decreases the solubility of HCN in, i.e., an aqueous solution. This advantageously allows for an increased amount of HCN being off-gased, i.e, exiting the aqueous solution and entering a headspace of a reactor vessel. Thus, an increased amount of gaseous HCN may be directed to reacting with the NaOH or KOH. Furthermore, a temperature in the above-mentioned range triggers acid decomposition of the second and third precursors.

In some embodiments, step b) is performed at a pH of from 1.8 to 4.5, preferably from 2 to 3.5. The inventors have found that these pH intervals are particularly suitable for the decomposition of the second and third precursors and result in a significantly higher yield of Prussian white compound.

In some embodiments of the preceding claims, the step a) is conducted at a temperature of from 15 to 95°C, such as 20-95°C, such as 60 to 95°C. The specified temperatures of step a) provide a high yield of the second and third precursors and enable a relatively fast reaction rate.

In some embodiments, said salt is FeSO₄, and said step a) comprises reacting:
NaCN with FeSO₄ to form Na₄Fe(CN)₆, or
KCN with FeSO₄ to form K₄Fe(CN)₆.

In some embodiments, said salt is FeSO₄, and said step a) comprises the reaction:

6 NaCN + FeSO₄ → Na₄Fe(CN)₆ + Na₂SO₄, or

6 KCN + FeSO₄ → K₄Fe(CN)₆ + K₂SO₄.

In some embodiments, said salt is Fe₃(PO₄)₂, and said step a) comprises reacting:
NaCN with Fe₃(PO₄)₂ to form Na₄Fe(CN)₆, or
KCN with Fe₃(PO₄)₂ to form K₄Fe(CN)₆.

In some embodiments, said salt is Fe₃(PO₄)₂, and said step a) comprises the reaction:

18 NaCN + Fe₃(PO₄)₂ → 3 Na₄Fe(CN)₆ + 2 Na₃PO₄, or

18 KCN + Fe₃(PO₄)₂ → 3 K₄Fe(CN)₆ + 2 K₃PO₄.

In embodiments wherein the salt in step a) is Fe(CH₃CO₂)₂, step a) comprises reacting:
NaCN with Fe(CH₃CO₂)₂ to form Na₄Fe(CN)₆, or
KCN with Fe(CH₃CO₂)₂ to form K₄Fe(CN)₆.
Step a) may comprise the reaction:

   6 NaCN + Fe(CH₃CO₂)₂ → Na₄Fe(CN)₆ + 2 NaH₃C₂O₂, or

   6 KCN + Fe(CH₃CO₂)₂ → K₄Fe(CN)₆ + 2 KH₃C₂O₂.

In some embodiments, said salt is Fe(HCO₂)₂, and said step a) comprises reacting:
NaCN with Fe(HCO₂)₂ to form Na₄Fe(CN)₆, or
KCN with Fe(HCO₂)₂ to form K₄Fe(CN)₆.

In some embodiments, said salt is Fe(HCO₂)₂, and said step a) comprises the reaction:

6 NaCN + Fe(HCO₂)₂ → Na₄Fe(CN)₆ + 2 NaHCO₂, or

6 KCN + Fe(HCO₂)₂ → K₄Fe(CN)₆ + 2 KHCO₂.

In some embodiments, said salt is FeC₂O₂, and said step a) comprises reacting:
NaCN with FeC₂O₂ to form Na₄Fe(CN)₆, or
KCN with FeC₂O₂ to form K₄Fe(CN)₆.

In some embodiments, said salt is FeC₂O₂, and said step a) comprises the reaction:

6 NaCN + FeC₂O₂ → Na₄Fe(CN)₆ + Na₂C₂O₂, or

6 KCN + FeC₂O₂ → K₄Fe(CN)₆ + K₂C₂O₂.

In some embodiments, said salt is FeCl₂, and said step a) comprises reacting:
NaCN with FeCl₂ to form Na₄Fe(CN)₆, or
KCN with FeCl₂ to form K₄Fe(CN)₆.

In some embodiments, said salt is FeCl₂, and said step a) comprises the reaction:

6 NaCN + FeCl₂ → Na₄Fe(CN)₆ + 2 NaCl, or

6 KCN + FeCl₂ → K₄Fe(CN)₆ + 2 KCl.

In some embodiments, said salt is MnSO₄, and said step a) comprises reacting:
NaCN with MnSO₄ to form Na₄Mn(CN)₆, or
KCN with MnSO₄ to form K₄Mn(CN)₆.

In some embodiments, said salt is MnSO₄, and said step a) comprises the reaction:

6 NaCN + MnSO₄ → Na₄Mn(CN)₆ + Na₂SO₄, or

6 KCN + MnSO₄ → K₄Mn(CN)₆ + K₂SO₄.

In some embodiments, said salt is Mn₃(PO₄)₂, and said step a) comprises reacting:
NaCN with Mn₃(PO₄)₂ to form Na₄Mn(CN)₆, or
KCN with Mn₃(PO₄)₂ to form K₄Mn(CN)₆.

In some embodiments, said salt is Mn₃(PO₄)₂, and said step a) comprises the reaction:

18 NaCN + Mn₃(PO₄)₂ →3 Na₄Mn(CN)₆ + 2 Na₃PO₄, or

18 KCN + Mn₃(PO₄)₂ → 3 K₄Mn(CN)₆ + 2 K₃PO₄.

In embodiments wherein the salt in step a) is Mn(CH₃CO₂)₂, step a) may comprise reacting:
NaCN with Mn(CH₃CO₂)₂ to form Na₄Mn(CN)₆, or
KCN with Mn(CH₃CO₂)₂ to form K₄Mn(CN)₆.
Step a) may comprise the reaction:

   6 NaCN + Mn(CH₃CO₂)₂ → Na₄Mn(CN)₆ + 2 NaH₃C₂O₂, or

   6 KCN + Mn(CH₃CO₂)₂ → K₄Mn(CN)₆ + 2 KH₃C₂O₂.

In some embodiments, said salt is Mn(HCO₂)₂, and said step a) comprises reacting:
NaCN with Mn(HCO₂)₂ to form Na₄Mn(CN)₆, or
KCN with Mn(HCO₂)₂ to form K₄Mn(CN)₆.

In some embodiments, said salt is Mn(HCO₂)₂, and said step a) comprises the reaction:

6 NaCN + Mn(HCO₂)₂ → Na₄Mn(CN)₆ + 2 NaHCO₂, or

6 KCN + Mn(HCO₂)₂ → K₄Mn(CN)₆ + 2 KHCO₂.

In some embodiments, said salt is MnC₂O₂, and said step a) comprises reacting:
NaCN with MnC₂O₂ to form Na₄Mn(CN)₆, or
KCN with MnC₂O₂ to form K₄Mn(CN)₆.

In some embodiments, said salt is MnC₂O₂, and said step a) comprises the reaction:

6 NaCN + MnC₂O₂ → Na₄Mn(CN)₆ + Na₂C₂O₂, or

6 KCN + MnC₂O₂ → K₄Mn(CN)₆ + K₂C₂O₂.

In some embodiments, said salt is MnCl₂, and said step a) comprises reacting:
NaCN with MnCl₂ to form Na₄Mn(CN)₆, or
KCN with MnCl₂ to form K₄Mn(CN)₆.

In some embodiments, said salt is MnCl₂, and said step a) comprises the reaction:

6 NaCN + MnCl₂ → Na₄Mn(CN)₆ + 2 NaCl, or

6 KCN + MnCl₂ → K₄Mn(CN)₆ + 2 KCl.

In some embodiments, step a) and/or step b) is/are conducted in the presence of water, such as in an aqueous solution. In other words, the second and third precursors can be formed in an aqueous solution during step a) and reacted in the aqueous solution during step b). Accordingly, steps of time-consuming purification and crystallization of the second and third precursors can be avoided. In addition, this advantageously allows for an environmentally friendly process as the use of costly and toxic organic solvents may be avoided. Furthermore, water has a relatively good heat/thermal storage capacity. Thus, the heat generated from the reaction in step a) heats the aqueous solution and may be substantially maintained and consequently benefit the reaction of step b).

In some embodiments, both said second and third precursors are Na₄Fe(CN)₆, or K₄Fe(CN)₆, said step b) comprises reacting:
Na₄Fe(CN)₆ with H₂SO₄ to form NaₐFe[Fe(CN)₆] and HCN, or
K₄Fe(CN)₆ with H₂SO₄ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 3 H₂SO₄ → Na₂Fe[Fe(CN)₆] + 6 HCN + 3 Na₂SO₄, or

2 K₄Fe(CN)₆ + 3 H₂SO₄ → K₂Fe[Fe(CN)₆] + 6 HCN + 3 K₂SO₄.

In some embodiments, both said second and third precursors are Na₄Fe(CN)₆, or K₄Fe(CN)₆, said step b) comprises reacting:
Na₄Fe(CN)₆ with H₄C₂O₂ to form NaₐFe[Fe(CN)₆] and HCN, or
K₄Fe(CN)₆ with H₄C₂O₂ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 6 H₄C₂O₂ → Na₂Fe[Fe(CN)₆] + 6 HCN + 6 NaH₃C₂O₂, or

2 K₄Fe(CN)₆ + 6 H₄C₂O₂ → K₂Fe[Fe(CN)₆] + 6 HCN + 6 KH₃C₂O₂.

In some embodiments, both said second and third precursors are Na₄Fe(CN)₆, or K₄Fe(CN)₆, said step b) comprises reacting:
Na₄Fe(CN)₆ with H₂C₂O₄ to form NaₐFe[Fe(CN)₆] and HCN, or
K₄Fe(CN)₆ with H₂C₂O₄ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 3 H₂C₂O₄ → Na₂Fe[Fe(CN)₆] + 6 HCN + 3 Na₂C₂O₄, or

2 K₄Fe(CN)₆ + 3 H₂C₂O₄ → K₂Fe[Fe(CN)₆] + 6 HCN + 3 K₂C₂O₄.

In some embodiments, both said second and third precursors are Na₄Fe(CN)₆, or K₄Fe(CN)₆, said step b) comprises reacting
Na₄Fe(CN)₆ with H₂CO₂ to form NaₐFe[Fe(CN)₆] and HCN, or
K₄Fe(CN)₆ with H₂CO₂ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:
2 Na₄Fe(CN)₆ + 6 H₂CO₂ → Na₂Fe[Fe(CN)₆] + 6 HCN + 6 NaHCO₂, or
2 K₄Fe(CN)₆ + 6 H₂CO₂ → K₂Fe[Fe(CN)₆] + 6 HCN + 6 KHCO₂.

In some embodiments, both said second and third precursors are Na₄Fe(CN)₆, or K₄Fe(CN)₆, said step b) comprises reacting:
Na₄Fe(CN)₆ with H₃PO₄ to form NaₐFe[Fe(CN)₆] and HCN, or
K₄Fe(CN)₆ with 2 H₃PO₄ to form KₐFe[Fe(CN)₆] and HCN, wherein 1.8 < a ≤ 2

In some embodiments, both said second and third precursors are Na₄Fe(CN)₆, or K₄Fe(CN)₆, said step b) comprises the reaction:

2 Na₄Fe(CN)₆ + 6 H₃PO₄ → Na₂Fe[Fe(CN)₆] + 6 HCN + 6 NaH₂PO₄, or

2 K₄Fe(CN)₆ + 6 H₃PO₄ → K₂Fe[Fe(CN)₆] + 6 HCN + 6 KH₂PO₄.

In some embodiments, both said second and third precursors are Na₄Fe(CN)₆, or K₄Fe(CN)₆, said step b) comprises reacting:
Na₄Fe(CN)₆ with H₃PO₃ to form NaₐFe[Fe(CN)₆] and HCN, or
K₄Fe(CN)₆ with H₃PO₃ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 6 H₃PO₃ → Na₂Fe[Fe(CN)₆] + 6 HCN + 6 NaH₂PO₃, or

2 K₄Fe(CN)₆ + 6 H₃PO₃ → K₂Fe[Fe(CN)₆] + 6 HCN + 6 KH₂PO₃.

In some embodiments, both said second and third precursors are Na₄Fe(CN)₆, or K₄Fe(CN)₆, said step b) comprises reacting
Na₄Fe(CN)₆ with HCl to form NaₐFe[Fe(CN)₆] and HCN, or
K₄Fe(CN)₆ with HCl to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 6 HCl → Na₂Fe[Fe(CN)₆] + 6 HCN + 6 NaCl, or

2 K₄Fe(CN)₆ + 6 HCl → K₂Fe[Fe(CN)₆] + 6 HCN + 6 KCl.

In some embodiments, both said second and third precursors are Na₄Fe(CN)₆, or K₄Fe(CN)₆, said step b) comprises reacting
Na₄Fe(CN)₆ with HClO₂ to form NaₐFe[Fe(CN)₆] and HCN, or
K₄Fe(CN)₆ with HClO₂ to form KₐFe[Fe(CN)₆] and HCN, wherein 1.8 < a ≤ 2.

In some embodiments, both said second and third precursors are Na₄Fe(CN)₆, or K₄Fe(CN)₆, said step b) comprises the reaction:

2 Na₄Fe(CN)₆ + 6 HClO₂ → Na₂Fe[Fe(CN)₆] + 6 HCN + 6 NaClO₂, or

2 K₄Fe(CN)₆ + 6 HClO₂ → K₂Fe[Fe(CN)₆] + 6 HCN + 6 KClO₂.

In some embodiments, said step c) comprises the reaction:

HCN + NaOH → NaCN + H₂O, or

HCN + KOH → KCN + H₂O.

The products NaCN or KCN obtained in step c) are introducible into the step a) of the method according to the present disclosure. The product water (H₂O) is environmentally friendly and may, in some embodiments, be introduced in the method of the present disclosure.

In some embodiments, said step a) is performed in a first reactor vessel, and said step b) is performed in a second reactor vessel arranged downstream of and in fluid communication with said first reactor vessel, and wherein said step c) is performed in a scrubbing device arranged in fluid communication with said first and/or said second reactor vessel.

This is beneficial since the reaction conditions of step a) may differ from the reaction conditions of step b), particularly with respect to pH. Hence, the reaction conditions for steps a), and b), respectively may be optimized in the first, and second reactor vessel, respectively.

Furthermore, undesired co-precipitation of poor-quality Prussian White is avoided. This may occur if the pH level is shifted between an alkaline pH (in step a) and an acidic pH (in step b) in the same reactor vessel.

A fluid communication advantageously allows for an efficient transport of fluids to and from said reactor vessel, second reactor vessel (when present), and scrubbing device. The fluid communication increases the safety as it allows for avoiding steps of extracting fluids to separate transport vessels and, e.g., manually moving such transport vessels within a factory or to an external facility.

It has been found that the method of the present disclosure advantageously may be conducted batch-wise or semi-continuous/continuous.

It is understood that each of the first reactor vessel, the second reactor vessel, and the scrubbing device may be provided with at least one inlet and at least one outlet respectively. Said at least one inlet and at least one outlet are configured to facilitate transport of fluids.

Herein, the term "reactor vessel" refers to a structure designed to contain and control chemical reactions under specific conditions of pressure, temperature, and chemical environment. The reactor vessel(s) is/are typically constructed from materials resistant to the chemicals involved and capable of withstanding the operational conditions, including, e.g., pressures and temperatures. Suitable materials for withstanding at least two cycles are known to the person skilled in the art.

Herein, the term "fluid" includes liquid and gas.

Herein, the term "fluid communication" refers to an arrangement and connection of pathways, channels, conduits, or passages that allow the transfer or flow of fluids (liquids and/or gases) between different components, such as reactor vessel and scrubbing devices, within a system. Fluid communication may be facilitated using valves, pumps, seals, and other mechanisms to regulate flow rates, pressure, and direction, thereby facilitating efficient and effective transport of fluids.

Herein, the term "scrubbing device" refers to an apparatus adapted to remove, e.g., contaminants or specific compounds for a gas or liquid stream. In particular, a scrubbing device refers to a device configured to house/facilitate a reaction between HCN and NaOH/KOH to form NaCN/KCN.

In some embodiments, said scrubbing device is a venturi scrubber, a packed-bed scrubber, or a spray tower scrubber.

In some embodiments, the scrubbing device comprises two or more scrubber units independently selected from a venturi scrubber, a packed bed scrubber, or a spray tower. This advantageously allows for combining characteristic features of different types of scrubber units. In the example of the two or more scrubber units, said scrubber units may be arranged in series and/or in parallel. Preferably, at least two scrubber units are arranged in series and at least one of the scrubber units is a venturi scrubber configured to receive HCN from the first and/or second reactor vessel.

Venturi scrubbers, packed bed scrubbers, and spray tower scrubbers are known to the person skilled in the art.

In some embodiments, said HCN formed in said step b) is directed to said scrubbing device by a carrier agent or by providing a pressure differential between said scrubbing device and said first and/or second reactor vessel.

Directing the HCN formed in said step b) to said scrubbing device by a carrier agent or by providing a pressure differential between said scrubbing device and said first and/or second reactor vessel advantageously allows for relatively rapidly moving the HCN from the first and/or second reactor vessel to the scrubbing device. Thereby the risk of unwanted HCN polymerization, on e.g., reactor vessel walls or pipes, is reduced. Additionally, this decreases the amount of HCN (in gas phase) in a headspace in the first and/or second reactor vessel. In other words, the partial pressure of the HCN in the headspace is decreased allowing for more HCN to be released from, e.g., a reactor liquid and be transported to the scrubbing device.

In some embodiments, said carrier agent is an inert gas, such as nitrogen gas or argon gas, preferably nitrogen gas. Utilizing an inert gas has been found advantageous as substantially no unwanted side reactions between the HCN and the carrier agent molecules occur, and oxidation of the Prussian white compound is prevented.

In some embodiments, the pressure differential is provided by applying a vacuum or by providing a lower pressure in said scrubbing device relative to said first and/or second reactor vessel.

In some embodiments, said step d) of introducing said first precursor into said step a) comprises:
i) collecting said first precursor in an aqueous solution in said scrubbing device; and
ii) introducing said aqueous solution comprising said first precursor into said first reaction vessel.

This advantageously allows for avoiding separate steps of time-consuming and cost-intensive steps of crystallizing the first precursor prior to introducing said first precursor into the first reaction vessel. Furthermore, by conducting step i) and ii) it is relatively easy to maintain a closed system, thereby avoiding unwanted reactions with ambient air.

Figure 2 describes a system according to a second aspect of the invention. According to the second aspect of the invention, there is provided a system 200 for manufacturing a Prussian White compound comprising:
a) a reactor unit 201 configured to conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn; and
   to conduct a second reaction of said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, 0 ≤ y ≤ 0.2; and
b) a scrubbing device 202 arranged in fluid communication with said reactor unit 201, wherein said scrubbing device 202 is configured to conduct a third reaction of NaOH or KOH with said HCN to form said first precursor, and
wherein said scrubbing device 202 is configured to feed said first precursor into said reactor unit 201.

Herein, a device, such as a reactor unit, configured to conduct a reaction, refers to a device able to facilitate and control chemical and/or physical reactions under specified conditions. The device is equipped with the necessary structural, mechanical, and control components known in the art. The reactor unit may comprise one or more than one reactor vessels. Hence, the reactor unit may also be referred to as a reactor assembly.

In some embodiments, said first reaction is conducted in a first reaction vessel of said reactor unit, and wherein said second reaction is conducted in a second reactor vessel of said reactor unit.

The effects and features of the second aspect are largely analogous to those described above in connection with the first aspect. Embodiments mentioned in relation to the first aspect are largely compatible with the second aspect. It is further noted that the inventive concepts relate to all possible combinations of features unless explicitly stated otherwise.

### EXAMPLES

### Example 1: Synthesis of Prussian white compound and recycling of HCN

### Cycle 1

A first aqueous solution comprising 202.66 g of a first precursor being virgin NaCN (aq) was prepared and arranged in a reactor. The volume of the first aqueous solution was 720 ml, and the pH was about 12. A total amount of about 191.66 g of FeSO₄·7H₂O (s) was added to the first aqueous solution over a period of one (1) hour (also referred to as addition period). The NaCN was reacted with the (now dissolved) FeSO₄ (aq) to form a second aqueous solution comprising (dissolved) Na₄Fe(CN)₆ (aq). The first aqueous solution was agitated using an over-head stirrer throughout the addition period and a subsequent 10-minute-long aging period. The temperature of the first aqueous solution before the addition of FeSO₄·7H₂O was 20 °C and the resulting second aqueous solution had an increased temperature.

After the aging period, the second aqueous solution was filtered to produce a filtrate substantially free from solids, i.e., by-products, such as iron hydroxides. The filtrate was arranged in a reactor. An acid decomposition reaction of the Na₄Fe(CN)₆ present in the filtrate was instigated by heating said filtrate to a temperature of about 85 °C and introducing sulfuric acid to reach a pH of about 2.9 to form a slurry. The slurry was maintained at said temperature and said pH for about six (6) hours. The slurry was agitated and a flow of N₂ gas was used as carrier agent for the HCN and was directed through the headspace in the reactor in order to minimize oxidation of the formed Prussian white compounds. After the six (6) hours of reaction, a solid-liquid separation (filtering step) was carried out on the slurry to obtain a filter cake. Said filter cake was washed with deionized water and subsequently dried, thereby obtaining Prussian white compounds in the form of particles.

During the above-mentioned acid decomposition reaction HCN was formed as a by-product. The HCN in gas phase was transported to a scrubber system where it was contacted with an aqueous solution comprising NaOH. This led to the formation of a scrubber solution comprising NaCN (l) (also referred to as recycled NaCN).

### Cycle 2-5

*Cycle 2* was carried out in a similar manner to *Cycle 1.* In *Cycle 2*, virgin NaCN was introduced into the scrubber solution obtained from *Cycle 1* to reach a target concentration of (dissolved) NaCN of about 341.27 g/L. The remaining steps of *Cycle 1* were repeated to obtain a new set of Prussian white particles and scrubber solution comprising recycled NaCN (l).

*Cycle 3* was conducted in a similar fashion to *Cycle* 2 with the main difference being using the scrubber solution from *Cycle 2* instead of *Cycle 1. Cycle 4* and *5* were conducted following the same pattern.

The amounts of reactants used in each of the cycles as well as the amount of Prussian white produced are presented in table 1.

**Table 1: Summary of amount of virgin reactants used, recycled NaCN used, and Prussian white obtained.**

| Cycle # | FeSO₄·7H₂O [g] | Virgin NaCN [g] | Recycled NaCN [g] | Obtained Prussian white [g] |
|---|---|---|---|---|
| 1 | 191.6 | 202.66 | N/A | 106.3 |
| 2 | 191.6 | 160.3 | 42.0 | 73.1 |
| 3 | 191.6 | 161.6 | 41.0 | 85.0 |
| 4 | 191.6 | 187.37 | 15.5 | 102.0 |
| 5 | 191.6 | 122.35 | 79.6 | 102.1 |

### Example 2: Synthesis and characterization of Prussian white compound

A first aqueous solution comprising NaCN and NaOH was prepared and arranged in a reactor. The volume of the first aqueous solution was 1.05 L, and the pH was above 12. In the first aqueous solution, the concentration of (dissolved) NaCN was 45.8 g/L and (dissolved) NaOH was 36.0 g/L. A total amount of about 77 g of FeSO₄*7H₂O (s) was added to the first aqueous solution over a period of one (1) hour (also referred to as addition period). The NaCN was reacted with the (now dissolved) FeSO₄ to form a second aqueous solution comprising (dissolved) Na₄Fe(CN)₆. The first aqueous solution was agitated using a magnetic stirrer throughout the addition period. The temperature of the first aqueous solution before the addition of FeSO₄·7H₂O was 20 °C and the resulting second aqueous solution had an increased temperature.

After the addition period, the second aqueous solution was filtered to produce a filtrate substantially free from solids, i.e., by-products, such as iron hydroxides. The filtrate was arranged in a reactor. An acid decomposition reaction of the Na₄Fe(CN)₆ present in the filtrate was instigated by heating said filtrate to a temperature of about 85 °C and introducing sulfuric acid to reach a pH of about 2.9 to form a slurry. The slurry was maintained at said temperature for about 12 hours. The slurry was agitated and a flow of N₂ gas was used through the head space in the reactor in order to minimize oxidation of the formed Prussian white compounds. After the 12 hours of reaction, a solid-liquid separation (filtering step) was carried out on the filtrate to obtain a filter cake. Said filter cake was washed with deionized water and subsequently dried, thereby obtaining Prussian white compounds in the form of particles.

### X-ray diffraction

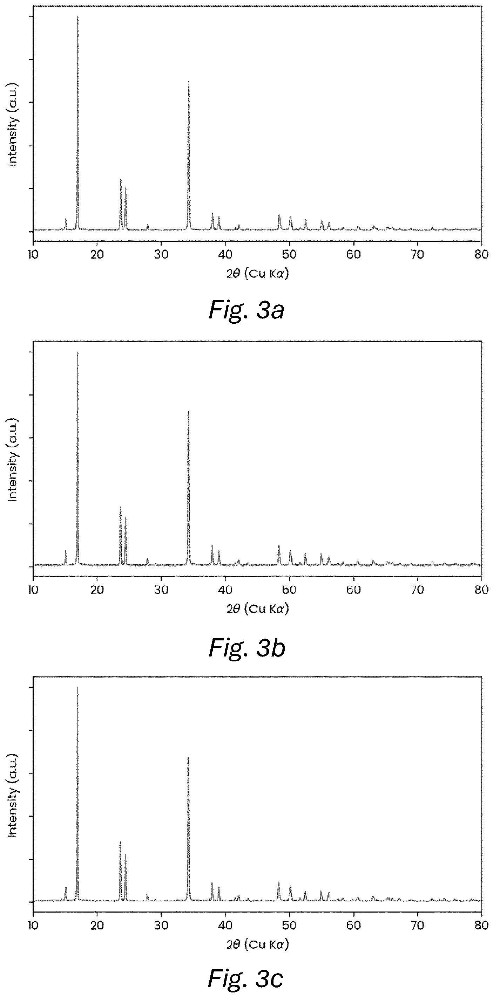

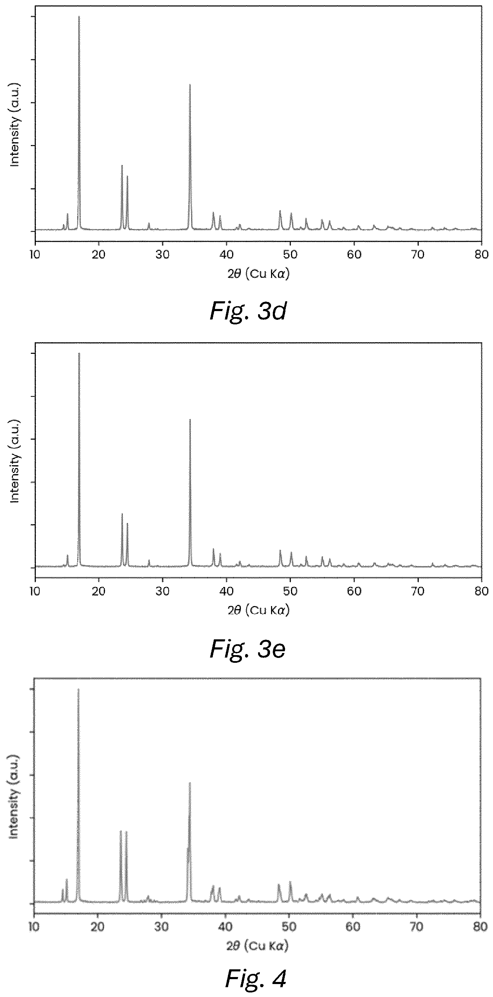

XRD and Rietveld refinement was conducted to determine the crystal structure of the Prussian white particles obtained from each of the cycles 1-5 of Example 1 and the Prussian white particles of Example 2. The XRD was conducted using a Bruker D8 Advance diffractometer equipped with a Cu Kα (λ1 = 1.540596 Å, λ2 = 1.544390 Å) source and a LYNXEYE XE-T detector over the range of 10-120 (2Θ) with a scanning step of 0.021°. The resulting X-ray diffractograms of the Prussian white particles from Cycles 1-5 are shown in Figure 3a-d, respectively, and the Prussian white particles of Example 2 are shown in Figure 4.

The Prussian white particles of Cycle 1-5 and Example 2 were concluded to be crystalline. The Prussian white particle of Cycle 1-5 had a hydrated rhombohedral crystal structure with an R3̅ space group symmetry. The Prussian white particles had a combination of hydrated rhombohedral crystal structure with an R3̅ space group symmetry and hydrated monoclinic phase with a P2₁/n space group symmetry. It is understood that as a plurality of particles are measured at the same time. It is contemplated that some particles may consist of said hydrated rhombohedral crystal, some of said hydrated monoclinic phase, and some a combination thereof. Such Prussian white particles have been found to be a promising cathode active material due to a high sodium content and low Fe(CN)₆ vacancy content. The high sodium content allows for producing battery cells having a high specific capacity (milliampere hours/gram). The rhombohedral crystal structure and the particular monoclinic structure identified through XRD indicate a high sodium content.

### Particle Size Analysis

Particle size distribution (PSD), Dv50 (volumetric particle size distribution), of the Prussian white particles from Cycle 1-5 was measured using a PSA 1090 LID (Anton Paar). The results of the Particle Analysis are presented in table 2.

**Table 2: Summary of the volumetric particle size distribution of the Prussian white particles obtained in Cycles 1-5.**

| **Cycle #** | **D_{V}50 [µm]** |
|---|---|
| 1 | 13.2 |
| 2 | 16.9 |
| 3 | 14.2 |
| 4 | 10.6 |
| 5 | 11.2 |

Clearly, in view of Example 1 and 2, the method of the present disclosure advantageously allows for an environmentally friendly and cost-effective way of manufacturing Prussian white particles by recycling the by-product HCN to form a precursor which can be used in a subsequent synthesis cycle. Additionally, the Prussian white particles obtained in each of Examples 1 and 2 have a high sodium content making them particularly suitable for use as cathode active material in battery cells.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for manufacturing a Prussian White compound comprising:
a) reacting a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
b) reacting said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, and 0 ≤ y ≤ 0.2;
c) recycling said HCN by reacting NaOH or KOH with said HCN to form said first precursor; and
d) introducing said first precursor into said step a).

2. The method according to claim 1, wherein said step a) is performed at a pH of from 9 to 14, preferably from 10 to 13.

3. The method according to claim 1 or claim 2, wherein said salt is defined by a first cation and a first anion; said acid being defined by a second cation and a second anion, wherein said second anion of said acid in said step b) corresponds to said first anion of said salt in said step a).

4. The method according to any one of the preceding claims, wherein said step b) is performed at a temperature of from 65 to 95°C, preferably from 75 to 95°C.

5. The method according to any one of the preceding claims, wherein said step b) is performed at a pH of from 1.8 to 4.5, preferably from 2 to 3.5.

6. The method according to any one of the preceding claims, wherein said salt is FeSO₄, and wherein said step a) comprises the reaction:
6 NaCN + FeSO₄ → Na₄Fe(CN)₆ + Na₂SO₄, or
6 KCN + FeSO₄ → K₄Fe(CN)₆ + K₂SO₄.

7. The method according to any one of the preceding claims, wherein both said second and third precursors are Na₄Fe(CN)₆, or K₄Fe(CN)₆, and wherein said step b) comprises reacting
Na₄Fe(CN)₆with H₂SO₄ to form NaₐFe[Fe(CN)₆] and HCN, or
K₄Fe(CN)₆with 3 H₂SO₄ to form KₐFe[Fe(CN)₆] and HCN, wherein
1.8 < a ≤ 2.

8. The method according to any one of the preceding claims, wherein said step c) comprises the reaction:
HCN + NaOH → NaCN + H₂O, or
HCN + KOH → KCN + H₂O.

9. The method according to any one of the preceding claims, wherein said step a) is performed in a first reactor vessel, and wherein said step b) is performed in a second reactor vessel arranged downstream of and in fluid communication with said first reactor vessel, and wherein said step c) is performed in a scrubbing device arranged in fluid communication with said first and/or said second reactor vessel.

10. The method according to claim 9, wherein said scrubbing device is a venturi scrubber, a packed-bed scrubber, or a spray tower scrubber.

11. The method according to claim 9 or claim 10, wherein said HCN formed in said step b) is directed to said scrubbing device by a carrier agent or by providing a pressure differential between said scrubbing device and said first and/or second reactor vessel.

12. The method according to claim 11, wherein said carrier agent is an inert gas, preferably nitrogen gas.

13. The method according to any one of claims 9-12, wherein said step d) of introducing said first precursor into said step a) comprises:
i) collecting said first precursor in an aqueous solution in said scrubbing device; and
ii) introducing said aqueous solution comprising said first precursor into said first reaction vessel.

14. A system (200) for manufacturing a Prussian White compound comprising:
a) a reactor unit (201) configured to conduct a first reaction of a first precursor selected from NaCN and KCN with a salt selected from the group consisting of CoSO₄, Co₃(PO₄)₂, Co(CH₃CO₂)₂, Co(HCO₂)₂, CoC₂O₄, CoCl₂, CrSO₄, Cr₃(PO₄)₂, Cr(CH₃CO₂)₂, Cr(HCO₂)₂, CrC₂O₄, CrCl₂, FeSO₄, Fe₃(PO₄)₂, Fe(CH₃CO₂)₂, Fe(HCO₂)₂, FeC₂O₄, FeCl₂, MnSO₄, Mn₃(PO₄)₂, Mn(CH₃CO₂)₂, Mn(HCO₂)₂, MnC₂O₄, MnCl₂, and combinations thereof to form a second precursor defined by the formula A₄X¹(CN)₆ and a third precursor defined by the formula A₄X²(CN)₆, wherein A is Na or K, and wherein X¹ and X² are individually selected from Co, Cr, Fe, and Mn;
and to conduct a second reaction of said second and third precursors with an acid selected from the group consisting of H₂SO₄, H₄C₂O₂, H₂C₂O₄, H₂CO₂, H₃PO₄, H₃PO₃, HCl, and HClO₂ under conditions that allow for a Prussian White compound to be formed and for HCN to be formed as a by-product, wherein said Prussian White compound is defined by the formula AₐX¹[X²(CN)₆]_{1-y}, wherein 1.8 < a ≤ 2, 0 ≤ y ≤ 0.2; and
b) a scrubbing device (202) arranged in fluid communication with said reactor unit (201), wherein said scrubbing device (202) is configured to conduct a third reaction of NaOH or KOH with said HCN to form said first precursor, and
wherein said scrubbing device (202) is configured to feed said first precursor into said reactor unit (201).

15. The system (200) according to claim 14, wherein said first reaction is conducted in a first reaction vessel of said reactor unit (201), and wherein said second reaction is conducted in said first reactor vessel or in a second reactor vessel of said reactor unit (201).
